# FASCICULE DE BREVET EUROPEEN

(11) **EP 3 259 674 B1**
(45) Date de publication et mention de la délivrance du brevet: **16.12.2020**
(21) Numéro de dépôt: 16707914.4
(22) Date de dépôt: 12.02.2016
(51) Int. Cl.: G06F 13/16

(54) **CIRCUIT DRAM MUNI D'UN PROCESSEUR INTEGRE**
MIT EINGEBAUTEM PROZESSOR AUSGESTATTETE DRAM-SCHALTUNG
DRAM CIRCUIT PROVIDED WITH A BUILT-IN PROCESSOR

(30) Priorité: 18.02.2015 FR 1551343
(43) Date de publication de la demande: 27.12.2017
(73) Titulaire: Upmem, 38000 Grenoble (FR)
(72) Inventeur: DEVAUX, Fabrice, 1052 Le Mont Sur Lausanne (CH); ROY, Jean-François, 38000 Grenoble (FR)
(74) Mandataire: IP Trust
(86) Numéro de dépôt international: PCT/FR2016/050327
(87) Numéro de publication internationale: WO 2016/132052

(56) Documents cités:
- EP-A1- 0 780 768
- WO-A1-2010/141221
- JP-A- H03 109 661
- US-B1- 6 463 001

## Description

### Domaine

La présente description concerne le domaine des circuits DRAM (mémoire dynamique à accès aléatoire) munis de processeurs intégrés, et des procédés de communication avec de telles mémoires.

### Arrière-plan

Les ordinateurs modernes comprennent en général un circuit de traitement, souvent mis en oeuvre sous forme d'un système sur une puce (SoC), couplé à un ou plusieurs circuits de mémoire dynamique à accès aléatoire (DRAM). De telles mémoires, qui nécessitent en général une opération de rafraîchissement périodique, sont denses et d'accès relativement rapide, et sont ainsi utilisées comme stockage de données RAM principal dans la plupart des ordinateurs. Cependant, vu les quantités toujours croissantes de données à transférer entre le SoC et les circuits DRAM, de tels transferts de données ont tendance à ralentir les opérations de l'ordinateur et conduisent à une consommation d'énergie relativement élevée.

Une solution qui a été proposée est de fournir des circuits DRAM ayant un ou plusieurs processeurs intégrés, en plus des processeurs se trouvant dans le SoC. Une telle solution réduit le volume de transfert de données entre les circuits DRAM et le SoC en autorisant de déléguer certaines tâches de traitement aux processeurs DRAM, de sorte que ces tâches peuvent être réalisées tout en évitant des transferts de données entre le circuit DRAM et le SoC.

Toutefois, une difficulté pour obtenir des circuits DRAM munis de processeurs intégrés est que l'interface avec le SoC est consommatrice de temps et est couteuse à mettre en oeuvre.

La demande internationale publiée sous le numéro WO2010/141221 décrit un système et un procédé pour arbitrer l'accès à une matrice mémoire associée à un processeur interne. L'arbitrage se fait par la mise en communication d'un processeur externe, comprenant un contrôleur mémoire, avec le processeur interne par l'intermédiaire d'une interface de contrôle formée par des liaisons électriques pour communiquer des signaux de requête et de validation. La publication EP 0 780 768 Al décrit un procédé de commande de dispositif d'entrée-sortie à programmation directe utilisant des registres virtuels . La publication US 6 463 001 B1 décrit un contrôleur de mémoire pour une mémoire DRAM adapté au rafraîchissement des données stockées dans la DRAM.

Un problème dans des systèmes tels que celui décrit dans la publication WO2010/141221 est que le processeur externe incorporant le contrôleur mémoire doit être modifié pour permettre aux signaux de commande d'arbitrage d'être transférés vers et à partir du processeur interne, ce qui conduit à un système complexe et coûteux.

### Résumé

Un objet de la présente description est de résoudre au moins partiellement un ou plusieurs problèmes de l'art antérieur.

La présente invention est définie par les revendications indépendantes jointes auxquelles il convient de se référer.

### Brève description des dessins

Les caractéristiques et avantages susmentionnés, et d'autres, apparaîtront clairement à la lecture de la description détaillée suivante de modes de réalisation, donnée à titre d'illustration et non de limitation, en faisant référence aux dessins joints dans lesquels :
la figure 1 illustre schématiquement un système informatique comprenant des circuits DRAM comportant des processeurs intégrés selon un exemple de réalisation ;
la figure 2 illustre schématiquement un bus de données DRAM selon un exemple ;
la figure 3 illustre schématiquement un bus de données DRAM selon un mode de réalisation de la présente description ;
la figure 4 illustre schématiquement une partie du système informatique de la figure 1 plus en détail selon un exemple de réalisation ;
la figure 5 illustre schématiquement un banc mémoire de la figure 4 plus en détail selon un exemple de réalisation ;
la figure 6 est un organigramme représentant des opérations dans un procédé de délégation d'une tâche de traitement à un processeur DRAM selon un exemple de réalisation ;
la figure 7 illustre schématiquement un circuit de contrôle de rafraîchissement selon un exemple de réalisation ;
la figure 8 est un organigramme illustrant des étapes dans un procédé de contrôle de rafraîchissement selon un exemple de réalisation ;
la figure 9 illustre schématiquement une partie d'un circuit DRAM de la figure 4 plus en détail selon un autre exemple de réalisation ; et
la figure 10 est un organigramme illustrant des opérations dans un procédé pour rendre un processeur de contrôle d'interface DRAM visible dans l'espace d'adresse DRAM selon un exemple de réalisation.

### Description détaillée

La présente description décrit des modes de réalisation d'un circuit mémoire comprenant un processeur intégré selon un exemple dans lequel le circuit mémoire est un circuit DRAM. Bien que cela ne soit pas représenté dans les figures, l'homme de l'art comprendra qu'un circuit DRAM est un dispositif mémoire dans lequel des données sont mémorisées par un réseau de cellules mémoire, chaque cellule mémoire comprenant un condensateur pour mémoriser un niveau de tension représentatif d'un bit de données, et un commutateur pour contrôler l'accès à la cellule mémoire. Cependant, les principes décrits ici peuvent être facilement appliqués à d'autres types de circuits mémoire, qui peuvent nécessiter ou pas une opération de rafraîchissement. Un avantage des modes de réalisation décrits ici est que l'intégration d'un ou plusieurs processeurs dans le circuit mémoire n'empêche pas une interface d'une version antérieure, n'ayant pas prévu de communication avec un tel processeur intégré, d'être utilisée pour communiquer avec le circuit mémoire.

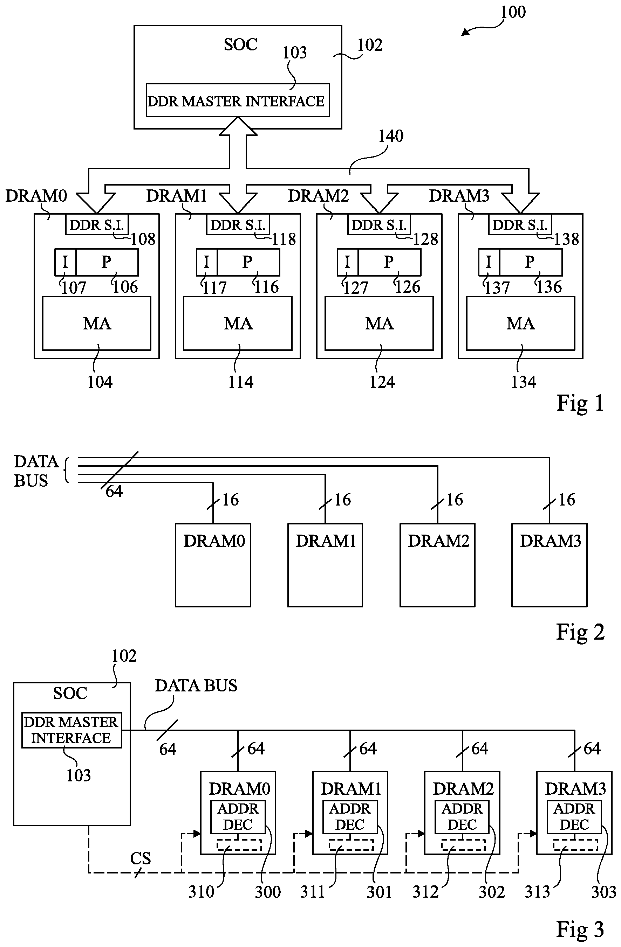

La figure 1 illustre schématiquement un système informatique 100 selon un exemple de réalisation. Le système informatique 100 comprend un dispositif de traitement central 102, mis en oeuvre dans cet exemple sous forme d'un système sur une puce (SoC), comprenant un ou plusieurs processeurs (non illustrés) et une interface maître DDR (DDR MASTER INTERFACE) 103 pour communiquer avec un certain nombre de circuits DRAM.

Dans l'exemple de la figure 1 il y a quatre circuits DRAM référencés DRAMO à DRAM3, mais dans des variantes de réalisation il pourrait y avoir un nombre quelconque de circuits DRAM.

Le circuit DRAM DRAMO comprend un réseau mémoire DRAM (MA) 104 et un ou plusieurs processeurs internes (P) 106, qui seront appelés dans la suite processeurs DRAM. Le circuit DRAM DRAMO comprend aussi par exemple une interface de contrôle de processeur DRAM (I) 107 associée à chaque processeur DRAM, permettant à un ou plusieurs processeurs dans le SoC 102 de communiquer avec les processeurs correspondants 106 et de les contrôler. Une interface esclave DDR 108 est par exemple prévue dans le circuit DRAM DRAMO pour des communications avec l'interface maître DDR 103.

De façon similaire, les circuits DRAM DRAM1, DRAM2 et DRAM3 comprennent respectivement des réseaux mémoires DRAM 114, 124, 134 et un ou plusieurs processeurs internes (P) 116, 126, 136. Les circuits DRAM DRAM1, DRAM2, DRAM3 comprennent aussi respectivement par exemple des interfaces de contrôle de processeur DRAM 117, 127, 137 permettant à un ou plusieurs processeurs se trouvant dans le SoC 102 de contrôler les processeurs 116, 126, 136 respectivement. Des interfaces esclaves DDR 118, 128, 138 sont par exemple prévues dans les circuits DRAM1, DRAM2, DRAM3 pour des communications avec l'interface maître DDR 103.

Les communications entre l'interface maître DDR 103 et chacune des interfaces esclaves 108, 118, 128, 138 se fait par exemple par l'intermédiaire d'un bus de liaison 140 comprenant un bus d'adresses, un bus de données, et dans certains cas une ou plusieurs autres lignes de commande (non illustrées en figure 1). Les communications avec les circuits DRAM DRAMO à DRAM3 sur le bus de liaison 140 respectent par exemple l'un des protocoles DDR.

Le terme "protocole DDR" est utilisé ici pour désigner un protocole quelconque parmi DDR1, DDR2, DDR3, DDR4, RLDRAM (mémoire à accès aléatoire à latence réduite), RLDRAM2, et tout protocole similaire à ces protocoles.

La figure 2 illustre schématiquement un bus de données d'une largeur de 64 bits (DATA BUS) pour connecter un SoC (non illustré) aux quatre circuits DRAM DRAMO à DRAM3. On peut voir que le bus de données est séparé de telle sorte que chaque circuit DRAMO à DRAM3 reçoive 16 bits du bus de données de 64 bits de large. Par exemple, le circuit DRAMO reçoit les bits 0 à 15, et contient les multiplets 0, 1, 8, 9, 16, 17, etc., le circuit DRAM1 reçoit les bits 16 à 31, et contient les multiplets 2, 3, 10, 11, 18, 19, etc., le circuit DRAM2 reçoit les bits 32 à 47, et contient les multiplets 4, 5, 12, 13, 20, 21, etc., et le circuit DRAM3 reçoit les bits 48 à 63, et contient les multiplets 6, 7, 14, 15, 22, 23, etc.. Un avantage d'un tel agencement est qu'il n'est pas nécessaire d'adresser séparément les circuits DRAM individuels. Cependant, lorsqu'un processeur est intégré dans chaque circuit DRAM, un inconvénient du fait de prévoir l'agencement de bus de données de la figure 2 est que chaque circuit DRAM mémorise des données discontinues, ce qui conduit à une forte complexité pour réaliser un traitement de ces données sous le contrôle des processeurs SoC.

La figure 3 illustre schématiquement un bus de données de 64 bits de large (DATA BUS) pour connecter un SoC (encore non illustré) aux quatre circuits DRAM DRAMO à DRAM3. Dans cet exemple, chaque circuit DRAM comprend une interface de bus à 64 bits couplée au bus de données à 64 bits, et ainsi chaque circuit DRAM reçoit la totalité des bits transmis sur le bus de données. Ainsi, chaque circuit DRAM contient une portion continue de la mémoire totale. Plus généralement, en supposant que le bus de données du SoC est de N bits, où N est un entier supérieur ou égal à 2, chacun des circuits DRAM a aussi un bus de données de N bits.

Un mécanisme est aussi par exemple prévu pour permettre au SoC de sélectionner le circuit DRAM pour chaque accès mémoire DRAM.

Dans un mode de réalisation, le SoC, ou un circuit additionnel de décodage d'adresse, est capable de fournir un signal de sélection de puce CS sur une ligne de sortie. Comme cela est représenté par une ligne en pointillés CS en figure 3, le signal CS est par exemple fourni à chaque circuit DRAM afin de sélectionner l'un de ces circuits DRAM pour un accès mémoire donné. Dans le cas où il y a quatre circuits DRAM, le signal CS est par exemple un signal de 2 bits, les valeurs "00", "01", "10" et "11" étant associées aux circuits DRAM DRAM0, DRAM1, DRAM2, DRAM3 respectivement. S'il y a un nombre différent de circuits DRAM, le signal CS peut comprendre un nombre de bits différent.

Dans un autre mode de réalisation, le SoC, ou un circuit additionnel de décodage d'adresse, est capable de fournir un signal de sélection de puce CS dédié à chaque circuit DRAM. Dans ce cas, la ligne en pointillé CS est un bus de 4 bits de largeur comprenant un signal dédié CS[0] fourni au circuit DRAM0, un signal dédié CS[1] fourni au circuit DRAM1, un signal dédié CS[2] fourni au circuit DRAM2, et un signal dédié CS[3] fourni au circuit DRAM3.

Dans une variante de réalisation, chacun des circuits DRAM est adapté à décoder une plage d'adresses différente de la plage d'adresses totale. Pour cela, les décodeurs d'adresses 300 à 303 des circuits DRAM DRAMO à DRAM3 ont respectivement par exemple des circuits dont chacun est adapté à décoder la plage d'adresse correspondante. Cependant, une telle solution présente l'inconvénient qu'elle ajoute de la complexité au processus de fabrication puisque les circuits DRAM ne sont plus identiques entre eux.

Une solution alternative consiste à prévoir un ensemble de fusibles associé à chaque décodeur d'adresse 300 à 303 et représenté par des rectangles en pointillés 310 à 313 respectivement. Les fusibles sont par exemple du type programmé par laser, par une tension appliquée à leurs bornes, ou par un courant qu'on fait passer dedans, et ils sont programmés après la fabrication des circuits DRAM de telle sorte que chaque circuit DRAM est configuré pour décoder une plage d'adresses spécifique.

Dans encore une autre solution alternative, la plage d'adresses acceptée par chaque circuit DRAM pourrait être configurée électriquement par des signaux d'entrée fournis à des bornes d'entrée du circuit DRAM directement après une opération de réinitialisation ou après une mise sous tension des circuits. Les bornes d'entrée pourraient être des bornes dédiées prévues dans ce but particulier, ou bien les broches d'entrée/sortie standards du circuit DRAM pourraient être utilisées pendant la phase de configuration pour permettre de définir les plages d'adresses.

On notera que le bus de données de la figure 3 dans lequel chaque ligne de données est couplée à plus d'un seul des circuits DRAM est susceptible d'amener une capacité électrique supérieure pour les lignes de données. Pour résoudre cela, un circuit tampon pourrait être ajouté sur chaque ligne de données. Cela pourrait augmenter la latence d'un accès mémoire d'un cycle ou plus, et conduirait à une augmentation relativement peu significative en pourcentage de la latence globale. En plus ou à la place, si les circuits DRAM sont montés dans un module mémoire se conformant à l'une des normes DIMM (module mémoire à double rangée de broches), la façon dont la capacité supplémentaire des lignes et/ou l'ajout des circuits tampons pourraient être masqués par un tel module DIMM apparaitra clairement à l'homme de l'art.

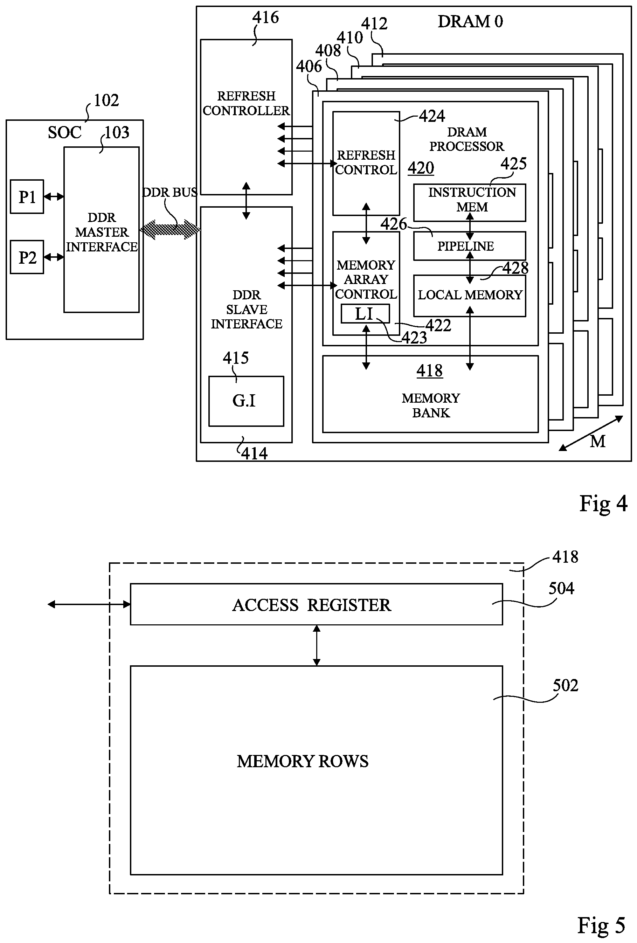

La figure 4 illustre schématiquement le SoC 102 et le circuit DRAMO plus en détail. Les autres circuits DRAM DRAM1 à DRAM3 ont par exemple des structures similaires.

Le SoC 102 comprend par exemple des processeurs P1 et P2, capables chacun d'accéder au circuit DRAM DRAMO. Les processeurs P1, P2 sont par exemple chacun sous le contrôle d'instruction mémorisées dans des mémoires d'instructions correspondantes (non illustrées en figure 4). Bien qu'il y ait deux processeurs dans le SoC de l'exemple de la figure 4, dans des variantes de réalisation il pourrait y avoir un nombre quelconque de processeurs.

Le circuit DRAM DRAMO comprend par exemple une pluralité de sous-mémoires 406, 408, 410 et 412, et une interface esclave DDR commune (DDR SLAVE INTERFACE) 414, comprenant une interface globale de contrôle de processeur DRAM (GI) du circuit DRAM, et un contrôleur de rafraîchissement commun (REFRESH CONTROLER) 416 couplé à chacune des sous-mémoires. Bien que dans les exemples de la figure 4 il y ait quatre sous-mémoires, il pourrait y avoir un nombre quelconque M de sous-mémoires.

La sous-mémoire 406 est illustrée en détail, et les autres sous-mémoires comprennent par exemple les mêmes éléments. La sous-mémoire 406 comprend par exemple un banc mémoire (MEMORY BANK) 418 formant une sous-portion du réseau mémoire du circuit DRAM DRAMO. La sous-mémoire 406 comprend aussi par exemple un processeur (DRAM PROCESSOR) 420 couplé au banc mémoire 418, comprenant un circuit de contrôle de banc mémoire (MEMORY ARRAY CONTROL) 422 comprenant une interface de contrôle de processeur DRAM locale (LI) 423, un circuit de contrôle de rafraîchissement (REFRESH CONTROL) 424, une mémoire d'instructions (INSTRUCTION MEMORY) 425, un pipeline de traitement (PIPELINE) 426, et une mémoire locale (LOCAL MEMORY) 428 du processeur.

Dans le mode de réalisation de la figure 4, l'interface de contrôle de processeur DRAM du circuit DRAMO est mise en oeuvre par l'interface globale 415, et par une interface locale 423 dans chacune des sous-mémoires. Cependant dans des variantes de réalisation, l'interface de contrôle de processeur DRAM pourrait être mise en oeuvre par seulement l'interface globale 415, ou par seulement une interface locale 423 dans chaque sous-mémoire.

Comme cela sera décrit plus en détail ci-après, le circuit de contrôle de rafraîchissement 424 permet un contrôle de transactions de rafraîchissement reçues par une sous-mémoire pendant qu'une opération de traitement de données est en cours par l'un des processeurs DRAM.

Le circuit de contrôle de banc mémoire 422 assure par exemple un multiplexage entre des requêtes de mémoire DDR à destination de ce banc et des requêtes de processeur DRAM.

Le pipeline de traitement 426 comprend par exemple des éléments de traitement de données qui opèrent sous le contrôle d'instructions mémorisées dans la mémoire d'instruction 425. Etant donné que les processeurs DRAM ont un rôle complémentaire en ce qui concerne le processeur SoC, ils utilisent par exemple un jeu d'instructions différent. Par exemple, les processeurs DRAM utilisent un ensemble d'instructions réduit comparé à celui utilisé par les processeurs SoC. Par exemple, dans certains modes de réalisation, une ou plusieurs instructions à exécuter par les processeurs DRAM sont écrites par un processeur SoC directement dans la mémoire d'instructions du processeur DRAM 425 par l'intermédiaire de l'interface globale 415 et/ou de l'interface locale 423. A la place ou en plus, une ou plusieurs instructions à exécuter par les processeurs DRAM sont écrites par un processeur SoC directement dans la banque mémoire 418, et le processeur SoC peut ensuite donner instruction au processeur DRAM de charger les instructions à partir du banc mémoire 418 dans sa mémoire d'instructions 425.

La mémoire locale 428 mémorise par exemple des données, temporairement ou autrement, utilisées par le pipeline de traitement 426 lors de la réalisation d'opérations sur les données contenues dans le banc mémoire 418.

Bien que cela ne soit pas illustré en figure 4, il peut y avoir un ou plusieurs autres circuits intermédiaires entre le SoC et les circuits DRAM. Par exemple, dans le cas où les circuits DRAM sont montés conformément aux normes DIMM dites "complétement équipés de registres" (de l'anglais "fully registered") ou "complétement équipés de tampons" (de l'anglais "fully buffered"), un tampon mémoire avancé (AMB) peut être prévu, permettant des fonctions de traitement complexes additionnelles.

La figure 5 illustre schématiquement le banc mémoire 418 de la figure 4 plus en détail selon un mode de réalisation. Comme cela est illustré, le banc mémoire 418 comprend par exemple un bloc de rangées mémoire DRAM (MEMORY ROWS) 502, et un registre d'accès (ACCESS REGISTER) 504.

Pendant une opération de lecture, à une adresse dans le banc mémoire 418 du circuit DRAM DRAM0, le banc mémoire 418 est sélectionné par une partie de l'adresse. La rangée à lire du banc mémoire 418 est ensuite identifiée sur la base de l'adresse, et la donnée de la rangée est chargée dans le registre d'accès 504. Un ou plusieurs mots constituant cette rangée peuvent ensuite être lus dans le registre d'accès 504 et fournis soit à un processeur du SoC 102, soit à la mémoire locale 428 du processeur 420 dans le cas où une opération de traitement interne doit être réalisée.

Pendant une opération d'écriture à une adresse dans le banc mémoire 418 du circuit DRAM DRAM0, le banc mémoire 418 est sélectionné par une partie de l'adresse. La rangée à écrire du banc mémoire 418 est ensuite identifiée sur la base de l'adresse, et chargée dans le registre d'accès 504. Un ou plusieurs mots formant cette rangée peuvent alors être écrits dans le registre d'accès par un processeur du SoC 102, ou dans la mémoire locale 428 du processeur 420 dans le cas où une opération de traitement interne doit être réalisée. Lorsque le registre d'accès 504 doit être réutilisé pour accéder à une autre rangée du banc mémoire 502 ou si une opération de rafraîchissement doit être réalisée, le contenu du registre d'accès 504 est réécrit dans la rangée correspondante du banc mémoire 418.

Il faut aussi noter que les opérations de transfert de rangées de données à partir des rangées mémoires 502 vers le registre d'accès 504 ou à partir du registre d'accès 504 vers les rangées mémoires 502 du banc mémoire sont des opérations relativement lentes réalisées sur plusieurs cycles d'horloge et qui ne doivent pas être interrompues une fois qu'elles ont été démarrées.

En outre, il n'est pas possible pour les processeurs SoC P1, P2 et/ou le processeur DRAM interne d'accéder, d'une manière finement entrelacée, à un même banc mémoire d'un circuit DRAM. Par exemple, le scénario suivant illustre cela:
- un processeur DRAM commence à charger le registre d'accès d'un banc mémoire avec une des rangées de ce banc mémoire, cette opération prenant plusieurs cycles ; et
- avant la fin de l'opération de chargement, un des processeurs SoC demande qu'une autre rangée du banc mémoire soit chargée dans le même registre d'accès, le processeur SoC attendant que cette opération de chargement soit achevée dans un nombre de cycles établi.

Cela crée un problème potentiel puisque les protocoles DDR ne permettent pas qu'une requête provenant d'un processeur SoC soit ignorée ou retardée, et la circuiterie du banc ne permet pas non plus qu'une opération de chargement dans un banc mémoire soit annulée au milieu d'une opération. En outre, le protocole DDR ne définit aucun mécanisme permettant à un circuit DRAM d'informer le processeur SoC qui accède à celui-ci :
- qu'il est incapable de traiter la requête d'accès mémoire tout de suite ;
- que les données demandées ne vont pas être disponibles immédiatement ;
- du temps nécessaire pour que les données demandées deviennent disponibles.

Par conséquent, dans les cas mis en avant précédemment, le processeur SoC est susceptible de considérer que, après le nombre établi de cycles associé à l'opération de chargement, le registre d'accès contient les données demandées, alors qu'en fait ce n'est pas le cas.

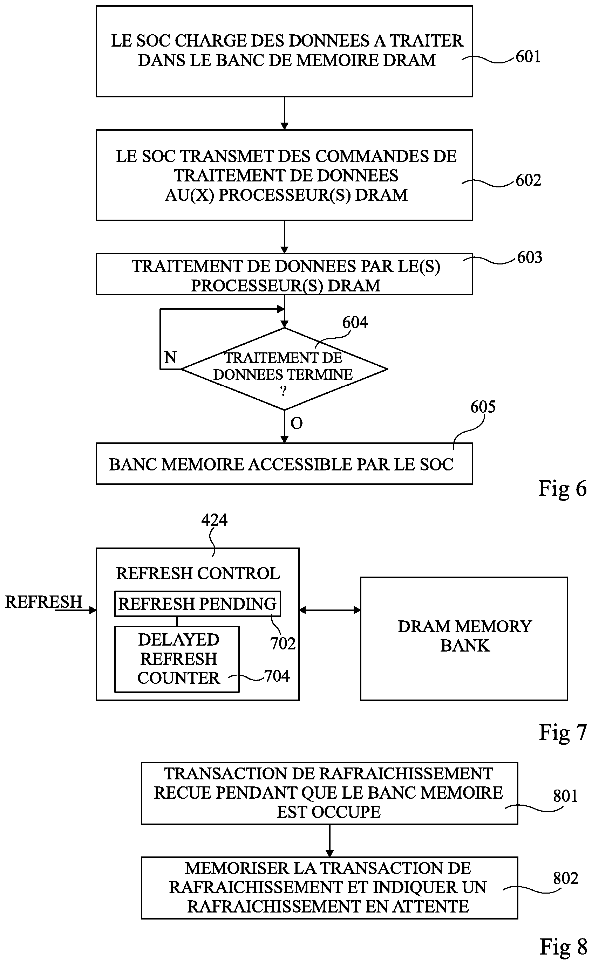

Ce problème est résolu au moins partiellement en définissant un protocole d'accès à utiliser par les processeurs SoC et les processeurs DRAM qui est aussi compatible avec un protocole DDR, comme on va le décrire maintenant plus en détail en faisant référence à la figure 6.

La figure 6 est un organigramme illustrant des opérations dans un procédé d'accès à un circuit DRAM selon un mode de réalisation de la présente description.

Dans une opération 601, un ou plusieurs processeurs du SoC chargent des données à traiter par un ou plusieurs processeurs DRAM dans une banque mémoire correspondante du circuit DRAM. Par exemple, si le processeur 420 de la sous-mémoire 406 de la figure 4 doit réaliser l'opération de traitement, les données sont par exemple chargées dans la banque mémoire 418.

Dans une opération 602, un ou plusieurs des processeurs SoC utilisent l'interface de contrôle de processeur DRAM du circuit DRAM pour indiquer auxdits un ou plusieurs processeurs DRAM qu'ils peuvent commencer à traiter les données.

Dans une opération 603, le traitement des données par les processeurs DRAM est réalisé, et pendant ce traitement, le logiciel s'exécutant sur les processeurs du SoC s'abstient d'accéder au banc mémoire correspondant. Dans le cas où l'un des processeurs SoC essaye d'accéder au banc mémoire pendant que l'un des processeurs DRAM est en train de traiter des données dans ce banc mémoire, une réponse indéfinie est par exemple fournie, et dans certains modes de réalisation un drapeau indicateur d'erreur peut être placé dans un registre de l'interface de contrôle de processeur DRAM pour indiquer que cette erreur est survenue, et pour faciliter le débogage.

Dans certains modes de réalisation, chaque processeur DRAM est dédié à un banc mémoire donné dans sa sous-mémoire. En variante, dans certains cas, plus qu'un seul processeur DRAM peut être capable d'accéder au même banc mémoire. Dans de tels cas, une procédure d'arbitrage peut être mise en oeuvre entre les processeurs DRAM afin de permettre aux processeurs DRAM d'accéder correctement à la banque mémoire. L'homme de l'art réalisera qu'une telle procédure d'arbitrage n'est pas contrainte par l'interface DDR utilisée pour les communications avec le SoC, et par conséquent toute procédure d'arbitrage appropriée peut être mise en oeuvre.

Dans une opération suivante 604, on détermine le moment où le traitement de données par le processeur DRAM est terminé. Lorsqu'il est terminé, l'opération suivante est l'opération 605, dans laquelle le banc mémoire devient accessible par le processeur SoC. Par exemple, l'interface de contrôle de processeur DRAM est utilisée pour informer le logiciel s'exécutant sur les processeurs SoC que les processeurs DRAM ont finis de traiter les données dans le banc mémoire. Par exemple, l'interface de contrôle de processeur DRAM comprend un registre accessible par les processeurs SoC et comprenant un bit d'état indiquant si les processeurs DRAM ont fini leur tâche, ou du moins la partie de celle-ci à laquelle ils avaient besoin d'accéder au banc mémoire. Lorsque les processeurs DRAM ont terminé le traitement des données dans le banc mémoire et l'ont libéré de sorte qu'il devient accessible de nouveau aux processeurs SoC, les processeurs DRAM sont par exemple configurés pour ne pas accéder de nouveau au banc mémoire jusqu'à recevoir l'instruction provenant des processeurs SoC de réaliser une autre opération de traitement.

Dans certains cas, les processeurs SoC peuvent être autorisés à stopper, au cours de celui-ci, le traitement par un processeur DRAM afin d'accéder rapidement aux données mémorisées dans le banc mémoire concerné. Par exemple, cela peut être approprié dans le cas où il y a une tâche à haute priorité à réaliser par un processeur SoC. Cela est par exemple obtenu en activant une commande d'arrêt par l'intermédiaire de l'interface de contrôle de processeur DRAM. Par exemple, après avoir reçu une commande d'arrêt, le processeur DRAM prend plusieurs cycles pour achever une ou plusieurs opérations d'accès courant, et informe le processeur SoC, par l'intermédiaire de l'interface de contrôle de processeur DRAM, du moment où le banc mémoire est prêt à être accédé.

Un avantage du procédé d'accès aux mémoires DRAM décrit en relation avec la figure 6 est qu'il assure que les processeurs DRAM ne sont jamais en compétition avec les processeurs SoC. En outre, les processeurs SoC sont capables d'accéder aux bancs mémoire du circuit DRAM d'une manière déterministe normale conformément aux protocoles de type DDR.

Bien sûr, les processeurs SoC se verront refuser l'accès à certains bancs mémoire pendant que les processeurs DRAM sont en train de traiter des données. Cependant, puisqu'il est probable qu'il y ait plusieurs bancs mémoire dans chaque circuit DRAM, plusieurs circuits DRAM dans un module DIMM, et potentiellement plusieurs modules DIMM, le fonctionnement des processeurs SoC a peu de chance d'être bloqué. En effet, les résultats des opérations de traitement demandées précédemment par d'autres processeurs DRAM ont de fortes chances d'être disponibles pour la collecte.

La figure 7 illustre schématiquement le circuit de contrôle de rafraîchissement (REFRESH CONTROL) 424 de la sous-mémoire DRAM plus en détail selon un exemple de réalisation.

Comme cela a été mentionné précédemment, les circuits DRAM demandent des opérations de rafraîchissement périodiques afin d'empêcher la perte de données. Par exemple, certaines technologies DRAM peuvent typiquement nécessiter que dans un délai de 64 ms toutes les lignes d'un banc mémoire aient été rafraichies. Par exemple, un système de contrôle de rafraîchissement intégré dans un contrôleur mémoire du SoC 102 génère des transactions de rafraîchissement périodiques, qui dans certains cas peuvent être transmises sous forme de paquets de rafraîchissement regroupant une pluralité de transactions de rafraîchissement pour un circuit DRAM donné.

On notera qu'il y a généralement une certaine tolérance dans la périodicité du rafraîchissement, ce qui permet de retarder des opérations de rafraîchissement, par exemple d'au moins quelques dizaines de microsecondes. Dans certains cas, il suffit que l'opération de rafraîchissement soit exécutée avant qu'une transaction de rafraîchissement suivante arrive. En outre, une opération de rafraîchissement ne modifie pas les données contenues dans un banc mémoire.

Le circuit de contrôle de rafraîchissement 424 permet avantageusement de retarder des opérations de rafraîchissement jusqu'à la fin d'un accès à un banc mémoire (DRAM MEMORY BANK) par un processeur DRAM.

Le circuit de contrôle de rafraîchissement 424 reçoit des transactions de rafraîchissement (REFRESH), et par exemple comprend un registre de rafraîchissement en attente (REFRESH PENDING) 702, et un compteur de rafraîchissement retardé (DELAYED REFRESH COUNTER) 704.

L'opération ou le fonctionnement du circuit de contrôle de rafraîchissement 424 de la figure 7 va maintenant être décrit plus en détail en faisant référence à la figure 8.

La figure 8 est un organigramme représentant des opérations dans un procédé de traitement de transactions de rafraîchissement. Ce procédé est par exemple réalisé localement par un circuit de contrôle de rafraîchissement 424 de chacune des sous-mémoires 406 à 412 du circuit DRAM. Initialement, on suppose qu'un circuit DRAM, comme le circuit DRAMO de la figure 4, a reçu une transaction de rafraîchissement, que le contrôleur de rafraîchissement 416 à propagé la transaction de rafraîchissement vers le circuit de contrôle de rafraîchissement 424 de chacune des sous-mémoires 406, 408, 410, 412 et que les circuits de contrôle de rafraîchissement 424 qui sont capables de réaliser immédiatement l'opération de rafraîchissement le font.

Dans une opération 801, le circuit de contrôle de rafraîchissement 424 de l'une des sous-mémoires reçoit une transaction de rafraîchissement pendant que son banc mémoire est occupé par un accès de banc mémoire par le processeur DRAM 420.

Dans une opération 802, le compteur de rafraîchissement retardé 704 mémorise la transaction de rafraîchissement et indique, par exemple dans le registre de rafraîchissement en attente 702, qu'une transaction de rafraîchissement est en attente. La transaction de rafraîchissement est par exemple lancée dès que l'accès au banc mémoire courant est terminé. Le registre de rafraîchissement en attente 702 est par exemple réinitialisé seulement une fois que l'opération de rafraîchissement a été achevée. Le registre de rafraîchissement en attente 702 est par exemple accessible par les processeurs DRAM et aussi par les processeurs SoC, et ces processeurs sont par exemple agencés pour ne pas tenter d'accéder au banc mémoire jusqu'à ce que le registre de rafraîchissement en attente ait été réinitialisé. Dans certains modes de réalisation, le bit d'état de l'interface de contrôle de processeurs DRAM est par exemple utilisé pour indiquer qu'une opération de traitement a été terminée et indique aussi au SoC qu'il n'y a plus de transactions de rafraîchissement en attente.

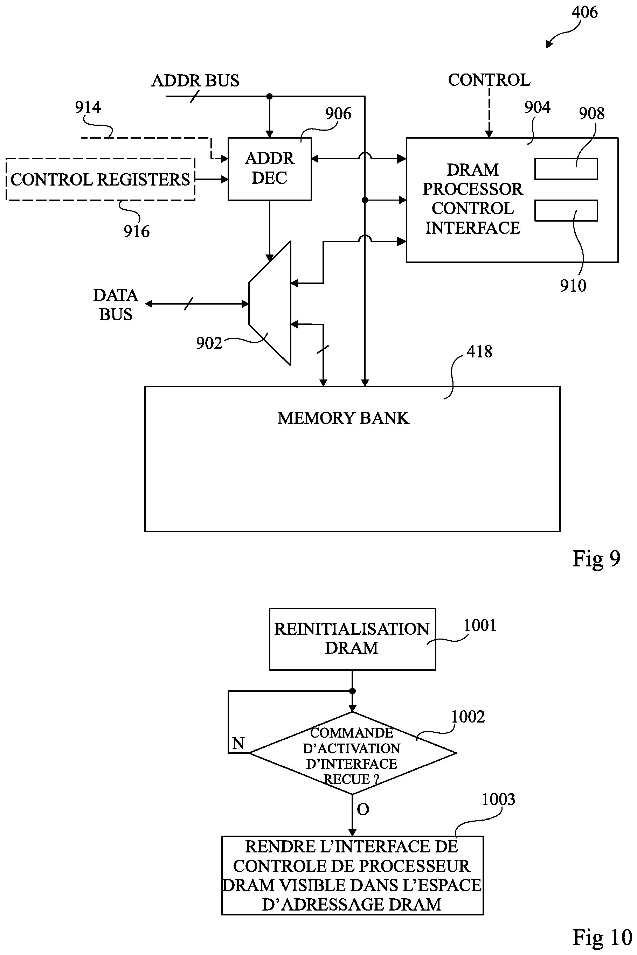

La figure 9 illustre schématiquement une partie de la sous-mémoire 406 de la figure 4 plus en détail selon un exemple de réalisation.

Le banc mémoire 418 est par exemple couplé à un bus d'adresses (ADDR BUS) et à un bus de données (DATA BUS) par l'intermédiaire d'un multiplexeur bidirectionnel 902. En particulier, le multiplexeur bidirectionnel a par exemple des ports d'entrée/sortie, l'un étant couplé au banc mémoire 418, et l'autre étant couplé à l'interface de contrôle de processeur DRAM (DRAM PROCESSOR CONTROL INTERFACE) 904, qui correspond par exemple à l'interface globale 415 et/ou à l'interface locale 423. Un autre port d'entrée/sortie du multiplexeur 902 est couplé au bus de données, et peut être couplé soit au banc mémoire 418 soit à l'interface 904 sur la base d'un signal de sélection fourni par un décodeur d'adresses 906.

L'interface 904 comprend par exemple un ou plusieurs registres de contrôle 908 et optionnellement de la mémoire partagée 910. Le but de la mémoire partagée 910 est par exemple de permettre de faire passer des informations à destination ou en provenance du processeur DRAM sans l'arrêter. L'interface 904 permet par exemple au moins une ou plusieurs des fonctions suivantes :
- initialiser des processeurs DRAM dans un circuit DRAM donné ;
- communiquer des paramètres aux processeurs DRAM et lancer l'exécution de programmes par les processeurs DRAM ;
- lire les résultats et des informations d'état concernant les processeurs DRAM ; et
- stopper les processeurs DRAM.

D'autres fonctions non listées ici peuvent aussi être mise en oeuvre en utilisant l'interface de contrôle de processeur DRAM.

Les interfaces de contrôle de processeur DRAM permettent aussi par exemple que des opérations soient réalisées par un sous-ensemble d'un ou plusieurs des processeurs DRAM d'un circuit DRAM donné, ou globalement par la totalité des processeurs DRAM d'un circuit DRAM donné.

L'interface 904 fait par exemple partie de l'espace mémoire adressable du circuit DRAM.

Dans certains modes de réalisation, l'espace mémoire adressable du circuit DRAM est plus grand que l'espace adressable dans les bancs mémoire du circuit DRAM afin de permettre que les emplacements d'adresses de l'interface 904 soient accessibles en permanence par les processeurs du SoC. Dans un tel cas, le décodeur d'adresse 906 contrôle par exemple le multiplexeur 902 pour coupler le bus de données à l'interface 904 si l'adresse est dans la plage d'adresses associée à l'interface 904.

En variante, dans certains modes de réalisation les emplacements d'adresses de l'interface 904 sont initialement visibles pour le SoC, et sont ensuite rendus inaccessibles par une commande de désactivation spécifique si l'interface 904 n'est pas nécessaire, ce qui implique par exemple que le processeur DRAM ne doit pas être utilisé. Par exemple, dans de tels modes de réalisation, immédiatement après une réinitialisation ou une mise sous tension du circuit DRAM, une certaine plage d'adresse correspond à l'espace mémoire de l'interface de contrôle de processeur DRAM 904. Cependant, cette plage d'adresses peut être transformée en un espace mémoire DRAM standard si la commande de désactivation est activée.

Dans d'autres modes de réalisation, les emplacements d'adresses de l'interface 904 sont initialement invisibles pour le SoC, et sont ensuite rendus accessibles par une commande d'activation spécifique si l'interface doit être utilisée, comme on va le décrire maintenant en faisant référence à la figure 10.

La figure 10 est un organigramme illustrant les opérations dans un procédé pour rendre l'interface de contrôle de processeur DRAM accessible dans l'espace d'adresses d'un circuit DRAM.

Dans une opération 1001, une opération de réinitialisation DRAM est réalisée, ou bien le circuit DRAM est mis sous tension. Initialement, une certaine plage d'adresses correspond à un espace d'adresses DRAM standard du circuit DRAM immédiatement à la suite d'une réinitialisation ou d'une mise sous tension du circuit DRAM.

Dans une opération 1002, on détermine, par exemple par l'interface de contrôle de processeur DRAM 904 et/ou le décodeur d'adresses 906, si une commande d'activation d'interface a été reçue. Si une telle commande est reçue, l'opération suivante est l'opération 1003.

Dans l'opération 1003, l'interface de contrôle de processeur DRAM est rendue visible dans l'espace d'adresses du circuit DRAM en transformant la plage d'adresses dans l'espace mémoire de l'interface de contrôle de processeurs DRAM 904.

La commande de désactivation ou d'activation correspond par exemple à un signal transmis à partir du SoC au décodeur d'adresses 906 par l'intermédiaire d'une broche d'entrée dédiée du circuit DRAM, comme cela est représenté par une ligne en pointillés 914 en figure 9.

En variante, la commande de désactivation ou d'activation correspond par exemple à une valeur contenue dans un ou plusieurs registres de contrôle (CONTROL REGISTERS) 916, qui sont présents dans certains circuits DRAM pour des transactions spéciales comme des commandes MRS (réglage de registre de mode). Par exemple, le décodeur d'adresses (ADDR DEC) 906 contrôle le multiplexeur 902 pour coupler le bus de données à l'interface 904 lorsque l'adresse sur le bus d'adresses est dans la plage d'adresses définie par les registres de contrôle 916. Plutôt que de faire usage de registres existants présents dans certains circuits DRAM, un ou plusieurs nouveaux registres pourraient être ajoutés, qui sont par exemple configurés pour être accessibles en utilisant une transaction MRS.

Dans encore une autre variante, le signal d'activation ou de désactivation peut être transmis par le SoC sur les bus mémoire standards du circuit DRAM, en utilisant par exemple le bus d'adresses. Pour cela, le décodeur d'adresses 906 et/ou l'interface 904 sont adaptés pour détecter une séquence spécifique de commandes provenant du SoC, qui va être appelée ici séquence magique. La séquence magique est par exemple une séquence de commandes correspondant à une adresse mémoire fictive, en d'autre terme une séquence qui respecte le protocole standard pour communiquer avec le circuit DRAM, mais qui peut être distinguée d'un accès mémoire réel. Elle est par exemple sélectionnée pour être une séquence de commandes qui a très peu de chances d'avoir lieu, ou même aucune, dans un fonctionnement normal du circuit DRAM. Plutôt qu'il y ait une seule séquence magique, dans certains modes de réalisation il peut y en avoir plusieurs, et la plage d'adresses de l'interface 906 dépend par exemple de quelle séquence magique est appliquée.

Dans certains modes de réalisation, pour éviter de fausses détections positives de la séquence magique, le circuit DRAM comprend par exemple un compteur de cycles d'horloge, ou un compteur de rafraîchissement, qui compte le nombre de cycles d'horloge ou de transactions de rafraîchissement qui ont été reçus. Une séquence est ensuite par exemple exclue pour ne pas être considérée comme séquence magique si :
- elle arrive avant un premier instant, c'est-à-dire avant un premier nombre de cycles d'horloge ou d'opérations de rafraîchissement, par exemple avant qu'une séquence d'amorçage ait été complétement terminée, ce qui signifie qu'elle a pu être générée accidentellement pendant l'amorçage ;
- elle arrive après un deuxième instant, c'est-à-dire après un deuxième nombre de cycles d'horloge ou d'opérations de rafraîchissement, par exemple longtemps après qu'une séquence d'amorçage ait été achevée, alors que le pilote logiciel qui gère les processeurs DRAM et peut générer la séquence magique est généralement activé juste après que le système d'exploitation a été chargé, et avant que les applications soient chargées ;
- elle prend plus d'un certain temps pour survenir, c'est-à-dire, plus qu'un certain nombre de cycles d'horloge ou d'opérations de rafraîchissement, tandis que la séquence magique réelle est susceptible de se produire sur une période de temps relativement resserrée.

Un exemple de séquence magique peut être de multiples accès consécutifs par un processeur SoC, une fois que la mémoire cache a déjà été activée, d'une même zone de la mémoire sans aucun autre accès intermédiaire à d'autres zones de la mémoire. En particulier, la mémoire cache est généralement activée très tôt pendant une séquence d'amorçage, puisque les processeurs SoC ont tendance à fonctionner lentement jusqu'à ce que la mémoire cache ait été activée. Une fois que le cache a été activé, il est peu probable que de multiples accès consécutifs aient lieu dans la même zone mémoire.

Un autre exemple de séquence magique consiste à définir certaines zones mémoire ne pouvant être mises en cache, puis à faire de multiples accès consécutifs à ces zones. En particulier, les processeurs modernes comprennent en général un MMU (module de gestion mémoire), qui permet de donner l'indication qu'une zone mémoire ne peut pas être mise en cache. Normalement, une application n'aurait aucune raison de demander qu'une partie de la mémoire ne puisse être mise en cache, puis que cela conduirait à une diminution prononcée des performances, sans aucun avantage en retour. Si le cache est actif, ce qui implique que le cache doit être utilisé, il y a peu de chances que de multiples accès consécutifs soient faits dans une même zone de mémoire DRAM. Par conséquent, la séquence magique est par exemple détectée par la présence de multiples accès mémoire à une zone de mémoire DRAM donnée.

Dans encore un autre exemple de séquence magique, on peut utiliser le fait que la mémoire puisse être mise en cache en mode de double écriture, comme cela va maintenant être décrit plus en détail.

Lorsqu'une zone mémoire peut être mise en cache, une opération de lecture selon un mode à "allocation de lecture" (de l'anglais "read allocate") implique :
a. vérifier si la zone cible de l'opération de lecture est déjà dans le cache ;
b. (i) si la zone cible est déjà en cache, la ligne de cache est lue, et l'opération de lecture est terminée ;
b. (ii) si la zone cible n'est pas déjà en cache, la zone cible est chargée dans le cache, cette ligne de cache est ensuite lue, et l'opération de lecture est terminée.

Une opération d'écriture peut être réalisée en utilisant l'un de deux modes, un mode "allocation d'écriture" (de l'anglais "write allocate"), ou un mode "double écriture" (de l'anglais "write through").

Une opération d'écriture selon le mode à allocation d'écriture implique :
a. vérifier si la zone cible de l'opération d'écriture est déjà en cache ;
b. (i) si la zone cible est déjà en cache, la ligne de cache correspondante est écrite, et l'opération d'écriture est terminée;
b. (ii) si la zone cible n'est pas déjà en cache, la zone cible est chargée dans une ligne de cache, la ligne de cache est écrite, puis l'opération d'écriture est terminée ;
c. les données sont écrites à partir du cache dans la mémoire principale lorsque la ligne de cache doit être retirée du cache et utilisée pour mettre à jour la mémoire principale.

Une opération d'écriture selon le mode de double écriture implique :
a. vérifier si la zone cible de l'opération d'écriture est déjà en cache ;
b. si la zone cible est déjà en cache, la ligne de cache correspondante est écrite ;
c. que la zone cible soit ou pas déjà en cache, les données sont aussi écrites dans la mémoire principale.

Le mode de double écriture peut utiliser des transactions d'écriture en phase dans lesquelles certains mots de la transaction ne sont pas écrits puisque la longueur de salve est supérieure à celle des données à écrire. Le mode à allocation d'écriture par contre utilise seulement des transactions d'écriture en salve dans lesquelles tous les mots de la transaction sont écrits.

Un processeur du SoC est par exemple capable de spécifier, par l'intermédiaire du MMU, si l'accès à chaque page de la mémoire doit être :
1) apte à être mis en cache ; ou
2) apte à être mis en cache en utilisant l'allocation de lecture et l'allocation d'écriture, ce qui est appelé généralement mode "allocation d'écriture" ; ou
3) apte à être mis en cache en utilisant l'allocation de lecture ou la double écriture, ce qui est en général appelé mode "double écriture".

Parmi ces modes, c'est en général le mode à allocation d'écriture qui donne les meilleures performances. Le mode double écriture est toutefois utilisé dans certaines configurations matérielles, par exemple si un tampon de trame est présent, ce tampon de trame étant lu par un processeur d'affichage n'ayant pas la capacité de réaliser d'espionnage de bus, et par conséquent pas capable de récupérer les données à lire dans le cache d'un processeur.

Dans les SoC modernes, les processeurs sont capables d'utiliser un espionnage de bus afin de récupérer les données à lire dans le cache d'un autre processeur. Par conséquent, il n'y a en général pas besoin d'utiliser le mode double écriture.

Par conséquent, la séquence magique peut correspondre à un accès fait en utilisant le mode de double écriture, détectable par le fait qu'un accès en salve est réalisé, dans lequel certains mots ne sont pas écrits. Par exemple, le signal d'activation d'écriture est désactivé pour au moins une valeur de données.

Un autre exemple de séquence magique est une série d'accès mémoire utilisant des emplacements anormaux dans l'espace et dans le temps. En particulier, lorsque le cache est utilisé, des accès répétés aux mêmes adresses mémoire sont réalisés en utilisant le cache au lieu du banc mémoire du circuit DRAM. Par conséquent, la présence d'accès répétés dans une zone relativement petite d'un banc mémoire, par exemple dans quelques mots, et dans une période de temps relativement courte, par exemple de plusieurs centaines de microsecondes, peut être reconnue comme un évènement improbable interprété comme séquence magique.

Un avantage des modes de réalisation décrits ici est qu'un circuit DRAM ayant un processeur interne peut opérer selon un protocole DDR, tout en permettant en même temps une amélioration de performances en réduisant dans une certaine mesure les opérations de transfert de données entre le circuit DRAM et le SoC. De plus, en réalisant l'interface de contrôle de processeur par un ensemble de registres de contrôle accessible dans l'espace d'adresses du circuit mémoire, l'interface peut être réalisée sans matériel dédié dans le processeur central. Une telle solution peut donc être appliquée à une réalisation existante d'un processeur central sans nécessiter de modifications au matériel. En particulier, l'interface est par exemple réalisée par un logiciel exécuté par le processeur central, le logiciel réalisant un protocole d'exclusion d'accès interdisant au processeur central d'accéder à un ou plusieurs bancs mémoire du réseau mémoire lorsque le processeur interne est en train d'effectuer une opération. Par exemple, le processeur central peut savoir quand les opérations sont en train d'être effectuées par le processeur interne, car le processeur central est responsable de la direction des commandes de traitement de données vers le processeur interne, et peut accéder, par l'intermédiaire de l'interface de contrôle de processeur, à des données indiquant quand le processeur interne a terminé une opération. Le protocole d'exclusion d'accès ne permet donc pas de tentatives d'accès simultanés de la part des processeurs central et interne, évitant donc le besoin d'arbitrage de collision entre ces processeurs.

Un avantage du mécanisme de retard des opérations de rafraîchissement dans le circuit mémoire est que des opérations de rafraîchissement peuvent être générées de façon classique par le processeur central, par exemple par un contrôleur mémoire du processeur central. Le contrôleur mémoire n'a donc pas besoin de connaître les opérations qui sont en cours d'exécution par le processeur interne du circuit mémoire.

Avec la description ainsi faite d'au moins un mode de réalisation illustratif, diverses altérations, modifications et améliorations apparaîtront facilement à l'homme de l'art.

Par exemple, il apparaitra clairement à l'homme de l'art que bien qu'on ait décrit des modes de réalisation dans lequel il y a une interface de contrôle de processeur DRAM pour chaque processeur DRAM, dans certains modes de réalisation une telle interface pourrait être partagée entre plusieurs processeurs.

## Revendications

1. Circuit mémoire dynamique à accès aléatoire (DRAM) comprenant :
un réseau mémoire (104) comprenant un ou plusieurs bancs mémoire (418) ;
un premier processeur (420) ;
le circuit étant **caractérisé en ce qu'**il comprend une interface de contrôle de processeur (904) pour recevoir des commandes de traitement de données adressées au premier processeur à partir d'un processeur central (P1, P2), l'interface de contrôle de processeur (904) étant adaptée à indiquer au processeur central quand le premier processeur a fini d'accéder à un ou plusieurs bancs mémoire du réseau mémoire, ces bancs mémoire devenant accessibles pour le processeur central, l'interface de contrôle de processeur (904) comprenant un ensemble de registres de contrôle (908) accessible dans l'espace d'adresses du circuit mémoire et l'interface de contrôle de processeur (904) ne comprenant pas de ligne de commande dédiée entre le premier processeur (420) et le processeur central (P1, P2) ; et
un circuit de contrôle de rafraîchissement (424) adapté:
à recevoir, à partir du processeur central, des transactions de rafraîchissement pour réaliser des opérations de rafraîchissement de données dans au moins un banc mémoire (418) du réseau mémoire ;
à déterminer si ledit au moins un banc mémoire (418) est en train d'être accédé par le premier processeur, et si oui, à retarder l'instant de début de l'opération de rafraîchissement de données.

2. Circuit mémoire selon la revendication 1, dans lequel le circuit de contrôle de rafraîchissement (424) comprend un registre de rafraîchissement en attente (702), et dans lequel le fait de retarder l'instant de début de l'opération de rafraîchissement de données comprend d'indiquer dans le registre de rafraîchissement en attente (702) que l'opération de rafraîchissement est en attente.

3. Circuit mémoire selon la revendication 1, dans lequel l'espace d'adresses du circuit mémoire comprend une ou plusieurs adresses associées de façon permanente à l'ensemble de registres de contrôle (908).

4. Circuit mémoire selon la revendication 1, dans lequel l'espace d'adresses du circuit mémoire comprend une ou plusieurs adresses associées à l'ensemble de registres de contrôle (908), et dans lequel lesdites une ou plusieurs adresses sont adaptées à être transformées en adresses du réseau mémoire lors de l'activation d'un signal de commande de désactivation de registre.

5. Circuit mémoire selon la revendication 1, adapté à recevoir un signal d'activation provenant du processeur central (P1, P2) pour rendre l'ensemble de registres de contrôle accessible dans l'espace d'adresses du circuit mémoire.

6. Circuit mémoire selon la revendication 5, dans lequel le signal d'activation est fourni par l'intermédiaire d'un bus d'adresses, et est détectable par l'interface de contrôle de processeur.

7. Circuit mémoire selon la revendication 6, dans lequel la séquence d'accès mémoire pour rendre l'ensemble de registres de contrôle accessible est une séquence d'accès en salve dans laquelle tous les mots ne sont pas écrits.

8. Circuit mémoire selon la revendication 6, dans lequel la séquence d'accès mémoire pour rendre l'ensemble de registres de contrôle accessible est une pluralité d'accès mémoire à des cellules mémoires se trouvant dans une zone mémoire dans l'un des bancs mémoire dans une première période de temps.

9. Circuit mémoire selon l'une quelconque des revendications 6 à 8, dans lequel le circuit mémoire est adapté à détecter la séquence d'accès mémoire sur la base d'un ou plusieurs des éléments suivants :
une période de temps dans laquelle la séquence d'accès mémoire est reçue ; et
une durée de la séquence d'accès mémoire.

10. Système comprenant :
une pluralité de circuits mémoire selon l'une quelconque des revendications 1 à 9; et
un processeur central (P1, P2) couplé à chacun des circuits mémoire par l'intermédiaire d'un bus de données commun de N bits, chaque circuit mémoire comprenant une interface de bus de N bits couplée au bus de données de N bits.

11. Procédé pour accéder à un circuit mémoire dynamique à accès aléatoire (DRAM) comprenant un réseau mémoire (104) comportant un ou plusieurs bancs mémoire (418) ; un premier processeur (420) ; et une interface de contrôle de processeur (904) comprenant un ensemble de registres de contrôle (908) accessible dans l'espace d'adresses du circuit mémoire, le procédé comprenant :
recevoir, par l'interface de contrôle de processeur (904), des commandes de traitement de données adressées au premier processeur (420) à partir d'un processeur central (P1, P2) ;
indiquer, par l'interface de contrôle de processeur (904) au processeur central (P1, P2) et sans utiliser de ligne de commande dédiée entre le premier processeur (420) et le processeur central (P1, P2), quand le premier processeur a fini d'accéder à un ou plusieurs des bancs mémoire (418) du réseau mémoire (104), ces bancs mémoire devenant accessibles par le processeur central (P1, P2) ;
recevoir, par un circuit de contrôle de rafraîchissement (424), une transaction de rafraîchissement pour réaliser une opération de rafraîchissement de données dans un banc mémoire (418) du réseau mémoire (104) ;
déterminer, par le circuit de contrôle de rafraîchissement (424), si le banc mémoire (418) est en train d'être accédé par le premier processeur (420) et si oui, retarder l'instant de début de l'opération de rafraîchissement de données.

12. Procédé selon la revendication 11, comprenant en outre :
recevoir par l'interface de contrôle de processeur (904) un signal d'activation à partir du processeur central (P1, P2) pour rendre l'ensemble de registres de contrôle accessible dans un espace d'adresses du circuit mémoire.

## Patentansprüche

1. Dynamische Direktzugriffsspeicherschaltung *(Dynamic Random Access Memory* - DRAM), umfassend:
ein Speicherarray (104), umfassend eine oder mehrere Speicherbänke (418);
einen ersten Prozessor (420);
wobei die Schaltung **dadurch gekennzeichnet ist, dass** sie eine Prozessorsteuerschnittstelle (904) zum Empfangen von Datenverarbeitungsbefehlen, die von einem Zentralprozessor (P1, P2) an den ersten Prozessor gerichtet sind, umfasst, wobei die Prozessorsteuerschnittstelle (904) geeignet ist, dem Zentralprozessor anzuzeigen, wenn der erste Prozessor den Zugriff auf eine oder mehrere Speicherbänke des Speicherarrays beendet hat, wobei die genannten Speicherbänke für den Zentralprozessor zugänglich werden, wobei die Prozessorsteuerschnittstelle (904) eine Gruppe von Steuerregistern (908) umfasst, auf die im Adressraum der Speicherschaltung zugegriffen werden kann, und wobei die Prozessorsteuerschnittstelle (904) keine dedizierte Befehlsleitung zwischen dem ersten Prozessor (420) und dem Zentralprozessor (P1, P2) umfasst; und
eine Auffrischungssteuerschaltung (424), die ausgelegt ist zum:
Empfangen, vom Zentralprozessor, von Auffrischungstransaktionen zur Durchführung von Datenauffrischungsvorgängen in mindestens einer Speicherbank (418) des Speicherarrays;
Bestimmen, ob auf die mindestens eine Speicherbank (418) durch den ersten Prozessor zugegriffen wird, und wenn ja, Verzögern der Startzeit des Datenauffrischungsvorgangs.

2. Speicherschaltung nach Anspruch 1, wobei die Auffrischungssteuerschaltung (424) ein ausstehendes Auffrischungsregister (702) umfasst, und wobei das Verzögern der Startzeit des Datenauffrischungsvorgangs das Anzeigen im ausstehenden Auffrischungsregister (702) beinhaltet, dass der Auffrischungsvorgang ausstehend ist.

3. Speicherschaltung nach Anspruch 1, wobei der Adressenbereich der Speicherschaltung eine oder mehrere Adressen umfasst, die der Gruppe von Steuerregistern (908) dauerhaft zugeordnet sind.

4. Speicherschaltung nach Anspruch 1, wobei der Adressenbereich der Speicherschaltung eine oder mehrere Adressen umfasst, die der Gruppe von Steuerregistern (908) zugeordnet sind, und wobei die eine oder die mehreren Adressen so ausgelegt sind, dass sie bei Aktivierung eines Registerdeaktivierungssteuersignals in Speicherarray-Adressen umgewandelt werden.

5. Speicherschaltung nach Anspruch 1, die ausgelegt ist zum Empfangen eines Aktivierungssignals von dem Zentralprozessor (P1, P2), um die Gruppe von Steuerregistern im Adressenbereich der Speicherschaltung zugänglich zu machen.

6. Speicherschaltung nach Anspruch 5, wobei das Aktivierungssignal über einen Adressbus bereitgestellt wird und durch die Prozessorsteuerschnittstelle detektierbar ist.

7. Speicherschaltung nach Anspruch 6, wobei die Speicherzugriffsfolge zum Zugänglichmachen der Gruppe von Steuerregistern eine Burst-Zugriffsfolge ist, in der nicht alle Wörter aufgeschrieben sind.

8. Speicherschaltung nach Anspruch 6, wobei die Speicherzugriffsfolge zum Zugänglichmachen der Gruppe von Steuerregistern mehrere Speicherzugriffe auf Speicherzellen, die sich in einem Speicherbereich in einer der Speicherbänke befinden, in einem ersten Zeitraum ist.

9. Speicherschaltung nach einem der Ansprüche 6 bis 8, wobei die Speicherschaltung dazu ausgelegt ist, die Speicherzugriffsfolge auf der Grundlage eines oder mehrerer der folgenden Elemente zu erfassen:
einen Zeitraum, in dem die Speicherzugriffsfolge empfangen wird; und
eine Dauer der Speicherzugriffsfolge.

10. System, umfassend:
mehrere Speicherschaltungen nach einem der Ansprüche 1 bis 9; und
einen Zentralprozessor (P1, P2), der mit jeder der Speicherschaltungen über einen gemeinsamen N-Bit-Datenbus gekoppelt ist, wobei jede Speicherschaltung eine mit dem N-Bit-Datenbus gekoppelte N-Bit-Bus-Schnittstelle umfasst.

11. Verfahren zum Zugreifen auf eine dynamische Direktzugriffsspeicherschaltung *(Dynamic Random Access Memory* - DRAM), die ein Speicherarray (104) mit einer oder mehreren Speicherbänken (418) umfasst;
einen ersten Prozessor (420); und
eine Prozessorsteuerschnittstelle (904), umfassend eine Gruppe von Steuerregistern (908), auf die im Adressenbereich der Speicherschaltung zugegriffen werden kann, wobei das Verfahren Folgendes umfasst:
Empfangen, durch die Prozessorsteuerschnittstelle (904), von Datenverarbeitungsbefehlen, die von einem Zentralprozessor (P1, P2) an den ersten Prozessor (420) gerichtet sind;
Anzeigen, durch die Prozessorsteuerschnittstelle (904) an den Zentralprozessor (P1, P2) und ohne Verwendung einer dedizierten Befehlsleitung zwischen dem ersten Prozessor (420) und dem Zentralprozessor (P1, P2), wenn der erste Prozessor den Zugriff auf eine oder mehrere Speicherbänke (418) des Speicherarrays (104) beendet hat, wobei auf die Speicherbänke durch den Zentralprozessor (P1, P2) zugegriffen werden kann;
Empfangen, durch eine Auffrischungssteuerschaltung (424), einer Auffrischungstransaktion zum Durchführen eines Datenauffrischungsvorgangs in einer Speicherbank (418) des Speicherarrays (104);
Bestimmen, durch die Auffrischungssteuerschaltung (424), ob auf die Speicherbank (418) durch den ersten Prozessor (420) zugegriffen wird, und wenn ja, Verzögern der Startzeit des Datenauffrischungsvorgangs.

12. Verfahren nach Anspruch 11, ferner Folgendes umfassend:
Empfangen, durch die Prozessorsteuerschnittstelle (904), eines Aktivierungssignals von dem Zentralprozessor (P1, P2), um die Gruppe von Steuerregistern in einem Adressenbereich der Speicherschaltung zugänglich zu machen.

## Claims

1. Dynamic random-access memory (DRAM) circuit comprising:
a memory array (104) comprising one or more memory banks (418);
a first processor (420);
the circuit being **characterized in that** it comprises a processor control interface (904) for receiving data processing commands addressed to the first processor from a central processor (P1, P2), the processor control interface (904) being suitable for indicating to the central processor when the first processor has finished accessing one or more memory banks of the memory array, said memory banks becoming accessible to the central processor, the processor control interface (904) comprising a set of control registers (908) accessible in the address space of the memory circuit and the processor control interface (904) not comprising a dedicated command line between the first processor (420) and the central processor (P1, P2); and
a refresh control circuit (424) suitable for:
receiving, from the central processor, refresh transactions for performing data refresh operations in at least one memory bank (418) of the memory array;
determining whether said at least one memory bank (418) is being accessed by the first processor, and if so, delaying the start time of the data refresh operation.

2. Memory circuit according to claim 1, wherein the refresh control circuit (424) comprises a pending refresh register (702), and wherein delaying the start time of the data refresh operation comprises indicating in the pending refresh register (702) that the refresh operation is pending.

3. Memory circuit according to claim 1, wherein the address space of the memory circuit comprises one or more addresses permanently associated with the set of control registers (908).

4. Memory circuit according to claim 1, wherein the address space of the memory circuit comprises one or more addresses associated with the set of control registers (908), and wherein said one or more addresses are suitable for being transformed into memory array addresses upon activation of a register deactivation command signal.

5. Memory circuit according to claim 1, suitable for receiving an activation signal from the central processor (P1, P2) to make the set of control registers accessible in the address space of the memory circuit.

6. Memory circuit according to claim 5, wherein the activation signal is provided via an address bus, and is detectable by the processor control interface.

7. Memory circuit according to claim 6, wherein the memory access sequence for making the set of control registers accessible is a burst access sequence in which not all words are written.

8. Memory circuit according to claim 6, wherein the memory access sequence for making the set of control registers accessible is a plurality of memory accesses to memory cells located in a memory area in one of the memory banks in a first period of time.

9. Memory circuit according to any of claims 6 to 8, wherein the memory circuit is suitable for detecting the memory access sequence on the basis of one or more of the following elements:
a period of time in which the memory access sequence is received; and
a duration of the memory access sequence.

10. System comprising:
a plurality of memory circuits according to any of claims 1 to 9; and
a central processor (P1, P2) coupled to each of the memory circuits via a common N-bit data bus, each memory circuit comprising an N-bit bus interface coupled to the N-bit data bus.

11. Method for accessing a dynamic random-access memory (DRAM) circuit comprising a memory array (104) including one or more memory banks (418); a first processor (420); and a processor control interface (904) comprising a set of control registers (908) accessible in the address space of the memory circuit, the method comprising:
the processor control interface (904) receiving data processing commands addressed to the first processor (420) from a central processor (P1, P2);
the processor control interface (904) indicating, to the central processor (P1, P2) and without using a dedicated command line between the first processor (420) and the central processor (P1, P2), when the first processor has finished accessing one or more of the memory banks (418) of the memory array (104), said memory banks becoming accessible by the central processor (P1, P2);
a refresh control circuit (424) receiving a refresh transaction for performing a data refresh operation in a memory bank (418) of the memory array (104);
the refresh control circuit (424) determining whether the memory bank (418) is being accessed by the first processor (420), and if so, delaying the start time of the data refresh operation.

12. Method according to claim 11, further comprising:
the processor control interface (904) receiving an activation signal from the central processor (P1, P2) to make the set of control registers accessible in an address space of the memory circuit.
